# EUROPEAN PATENT APPLICATION

(11) **EP 4 249 983 A2**
(43) Date of publication of application: **27.09.2023**
(21) Application number: 23173754.5
(22) Date of filing: 12.02.2020
(51) Int. Cl.: G02B 21/34

(54) **APPARATUSES, SYSTEMS AND METHODS FOR MICROSCOPE SAMPLE HOLDERS**

(30) Priority: 12.02.2019 US 201962804606 P
(62) Divisional of application: 20756139.0
(71) Applicant: University of Washington, Seattle, WA 98105 (US)
(72) Inventor: GLASER, Adam K., Seattle, 98105 (US); LIU, Jonathan T. C., Seattle, 98105 (US); REDER, Nicholas, Seattle, 98105 (US)
(74) Representative: D Young & Co LLP

(57) **Abstract**

Apparatuses, systems, and methods for modular sample holders. The microscope may direct illumination light along an illumination path towards a sample and collect light from the sample along a collection path. Light along the illumination path may pass through an immersion fluid and the material of the sample holder to reach the sample. Light along collection path may pass through the material of the sample holder and the immersion fluid. The sample holder may have a first optical surface along the illumination path which is generally perpendicular to an optical axis of the illumination path. The sample holder may have a second optical surface along the collection path which is generally perpendicular to an optical axis of the collection path. The sample holder may be modular. The sample holder may contain the sample in an enclosed channel.

## Description

### CROSS-REFERENCE TO RELATED APPLICATION(S)

This application claims the benefit under 35 U.S.C. § 119 of the earlier filing date of U.S. Provisional Application Serial No. 62/804,606 filed February 12, 2019, the entire contents of which is hereby incorporated by reference in its entirety for any purpose.

### STATEMENT REGARDING RESEARCH & DEVELOPMENT

This invention was made with government support under Grant No. W81XWH-14-2-0183, awarded by the Department of Defense and Grant Nos. F32 CA213615, awarded by the National Institutes of Health. The government has certain rights in the invention.

### TECHNICAL FIELD

Embodiments of the invention relate generally to optical imaging, and particularly to microscopy.

### BACKGROUND

Microscopy may generally involve directing light onto a sample, and then imaging the sample based on light received from the sample. Some microscopes place the optics of the system on an opposite (bottom) side of a sample holder relative to the sample. This may improve access to the sample, ease of preparing/mounting the sample, etc. Accordingly, the illumination light and the collection light may pass through the material of the sample holder to pass between the optics and the sample.

Different types of samples may require different types of sample holders to support them. For example, some samples may rest on a flat plat, such as a glass slide, while others may be suspended in a liquid (e.g., in a well plate). It may be useful to have a microscope which accommodates a variety of sample types and sample holders without interfering with the optics of the microscope.

### SUMMARY

In at least one aspect, the present disclosure relates to an apparatus which includes illumination optics, collection optics, an immersion chamber and a sample holder. The illumination optics direct illumination light along an illumination path to a sample. The collection optics receive light from the sample along a collection path. The immersion chamber holds an immersion medium. The sample holder supports the sample and includes a first surface and a second surface opposite the first surface. The second surface is adjacent to the immersion medium. The second surface includes a first optical surface along the illumination path which is generally perpendicular to the illumination path and a second optical surface along the collection path which is generally perpendicular to the collection path.

The apparatus may include a support member which may support the sample holder in an orientation relative to the illumination path and the collection path. The sample holder may be a modular sample holder removably positionable in a receptacle of the support member. The first optical surface may be generally perpendicular to the second optical surface. The immersion medium, the sample, the first optical surface, and the second optical surface, may have a matched index of refraction. The sample holder may include an enclosed channel which may contain the sample. The enclosed channel may be coupled to an inlet configured to provide a fluid to the channel and an outlet configured to drain the fluid from the channel. The sample holder may include a plurality of troughs. The sample holder may include a plurality of wells.

In at least one aspect, the present disclosure relates to a system which includes a microscope and a modular sample holder. The microscope includes a support receptacle and an immersion fluid. The microscope directs an illumination beam along an illumination path through the immersion fluid towards a focal region and receives collected light from the focal region through the immersion fluid along a collection path. The modular sample holder includes a sample chamber which supports a sample and a first optical surface and a second optical surface positioned along a side of the modular sample holder. The modular sample holder is removably positionable in the support receptacle such that the focal region is positionable within the sample, the first and the second optical surfaces are adjacent to the immersion fluid, the first optical surface is along the illumination path and generally perpendicular to the illumination path, and the second optical surface along the collection path and generally perpendicular to the collection path.

The illumination beam may be a light sheet. The sample holder may include a trough configured to hold the sample, and the first optical surface and the second optical surface may form a bottom of the trough. The sample holder may include a well configured to hold the sample, and the first optical surface and the second optical surface may form a bottom of the well. The sample holder may include a channel which may hold the sample. The first optical surface may be generally perpendicular to the second optical surface. The sample, the immersion fluid, the first optical surface, and the second optical surface may have a matched index of refraction.

In at least one aspect, the present disclosure relates to an apparatus including illumination optics which provide illumination light to a sample, collection optics which receive light from the sample, an immersion chamber which holds an immersion fluid, and a sample holder. The sample holder includes enclosed channels through a material of the sample holder. The enclosed channel holds the sample. The sample holder is positionable such that a surface of the sample holder is adjacent to the immersion fluid. The illumination light passes through the immersion medium and the sample holder before reaching the sample, and the light from the sample passes through the sample holder and the immersion medium before reaching the collection optics.

The enclosed channel may have a generally circular cross-section. The channel may be part of a microfluidic device. The sample holder may include a first optical surface adjacent to the immersion fluid and a second optical surface adjacent to the immersion fluid. The illumination light may pass through the first optical surface and the collected light may pass through the second optical surface. The first optical surface may be generally perpendicular to an optical axis of the illumination light and the second optical surface may be generally perpendicular to an optical axis of the collected light. The first optical surface may be generally perpendicular to the second optical surface

The first optical surface and the second optical surface may form a bottom surface of the enclosed channel. The enclosed channel may be coupled to an inlet configured to provide a fluid to the channel and an outlet configured to drain the fluid from the channel. The apparatus may also include a support member which may support the sample holder. The sample holder may be a modular sample holder removably positionable in the support member. The illumination light may be a light sheet.

### BRIEF DESCRIPTION OF THE DRAWINGS

**Figure 1** is a block diagram of an open top microscope with a solid immersion meniscus lens according to some embodiments of the present disclosure.
**Figure 2** is a perspective view of a microscope with a modular sample holder according to some embodiments of the present disclosure.
**Figure 3** is a side view and a top view of a modular sample holder with a flat surface according to some embodiments of the present disclosure.
**Figure 4** is a side view and a top view of a modular sample holder with sample wells according to some embodiments of the present disclosure.
**Figure 5** is a side view and a top view of a modular sample holder with sample troughs according to some embodiments of the present disclosure.
**Figure 6** is a side view and a top view of a modular sample holder with wells with trough bottoms according to some embodiments of the present disclosure.
**Figure 7** is a side view and a top view of a modular sample holder with flow channels according to some embodiments of the present disclosure.
**Figure 8** is a side view and a top view of a modular sample holder with flow channels and optical surfaces according to some embodiments of the present disclosure.
**Figure 9** is a side view and a top view of a modular sample holder with flow channels and optical surfaces according to some embodiments of the present disclosure.
**Figures 10A-10B** show cross-sectional side views of sample holders with flow cells which are open and closed respectively, according to some embodiments of the present disclosure.
**Figure** 11 is a chart of the compatibility of different immersion fluids and sample holder materials according to some embodiments of the present disclosure.

### DETAILED DESCRIPTION

The following description of certain embodiments is merely exemplary in nature and is in no way intended to limit the scope of the disclosure or its applications or uses. In the following detailed description of embodiments of the present systems and methods, reference is made to the accompanying drawings which form a part hereof, and which are shown by way of illustration specific embodiments in which the described systems and methods may be practiced. These embodiments are described in sufficient detail to enable those skilled in the art to practice presently disclosed systems and methods, and it is to be understood that other embodiments may be utilized and that structural and logical changes may be made without departing from the spirit and scope of the disclosure. Moreover, for the purpose of clarity, detailed descriptions of certain features will not be discussed when they would be apparent to those with skill in the art so as not to obscure the description of embodiments of the disclosure. The following detailed description is therefore not to be taken in a limiting sense, and the scope of the disclosure is defined only by the appended claims.

Microscopy may be used in a wide array of applications to produce images of a sample, usually with a field of view and/or resolution which are not normally visible to the naked eye. Illumination light may be directed onto a sample with illumination optics. Collection optics may be used to collect light from the sample onto a detector (for example, a CCD detector, a CMOS detector, or a user's eyes). In some instances, the light which reaches the detector may include a portion of the illumination light. In some instances, the light which reaches the detector may be emitted from the sample (e.g., via fluorescence) after being stimulated to emission by the illumination light. It may be desirable to ensure that the field of view receives even illumination and to ensure that the illumination penetrates the depth of the sample.

The illumination and collection optics may be positioned on an opposite side of the sample holder from the sample (e.g., on an underside of the sample holder). Accordingly, the illumination and collection light may pass through the material of the sample holder. The illumination and/or collection optics may be arranged at an angle relative to a sample holder. For example, the illumination and collection optics may each be at a 45° angle relative to the sample holder. While this may offer advantages for optimization of imaging parameters and depth of imaging, the non-normal incidence of the illumination and/or collection light with the sample holder may lead to various aberrations. While an individual sample holder may be optically optimized for a particular setup, different sample types may have different sample holder requirements. It may be useful for a microscope to accommodate different sample holders which are compatible with the optics of the microscope.

The present disclosure is directed to microscope sample holders. A microscope includes a sample holder with a first side and a second side opposite the first side. Illumination and collection optics are positioned on the second side of the sample holder when the sample holder is positioned in the microscope. The illumination light passes through an immersion fluid and through the material of the sample holder before reaching the sample. Collected light passes through the material of the sample holder and through the immersion fluid before reaching the sample. The sample holder may be a modular component of the microscope. Different modular sample holders may have different geometries to accommodate different types of samples, different imaging modalities, different experimental conditions, and combinations thereof. Some of the modular sample holders may include a first optical surface along the illumination optical path between the immersion fluid and the sample and a second optical surface along the collection optical path between the sample and the immersion fluid. The first optical surface may be generally perpendicular to the optical axis of the illumination path, and the second optical surface may be generally perpendicular to the optical axis of the collection path. The use of the optical surfaces may reduce a need for index matching between the sample, material of the sample holder, and immersion fluid, and may also allow for objective lenses (e.g., illumination and/or collection objectives) with shorter working distances.

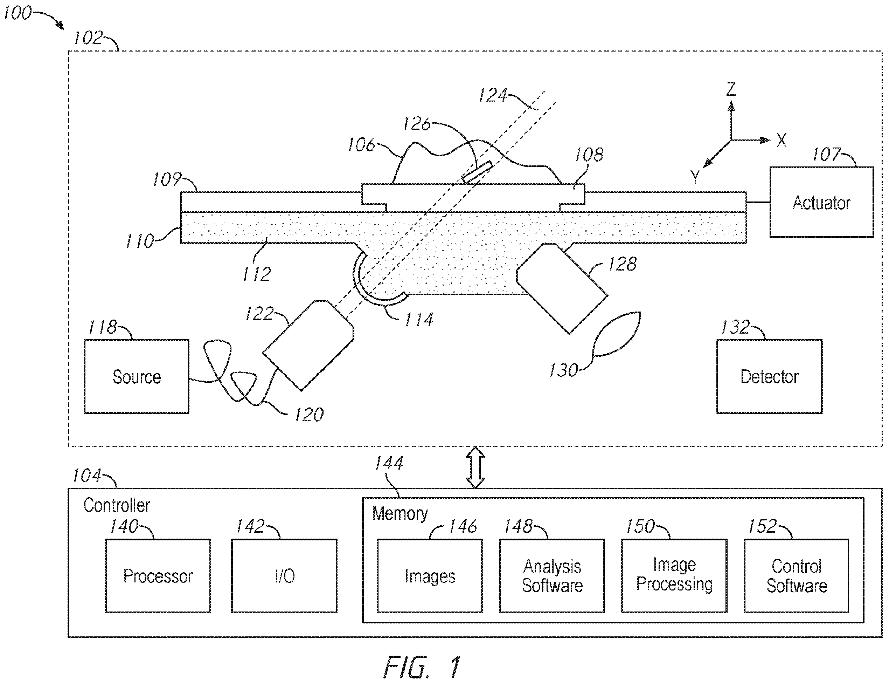

**Figure 1** is a block diagram of a microscope with a modular sample holder according to some embodiments of the present disclosure. Figure 1 shows an optical system 100 which includes a microscope 102 and an optional controller 104 which may operate the microscope 102 and/or interpret information from the microscope 102. In some embodiments, one or more parts of the controller 104 may be omitted, and the microscope 102 may be operated manually. In some embodiments, one or more parts of the controller 104 may be integrated into the microscope 102. In some embodiments, such as the example of Figure 1, the microscope 102 may be an open-top microscope.

The microscope 102 includes a sample holder 108 which supports a sample 106. A bottom surface of the sample holder 108 is adjacent to an immersion fluid 112, which is contained within an immersion chamber 110. The microscope 102 of Figure 1 has an illumination path and collection path which are separate from each other. The illumination path include a source 118, illumination optics 120, and an illumination objective 122. The illumination path provides an illumination beam 124 which passes through the immersion medium 112 and sample holder 108 to illuminate the sample 106. The collection path includes a collection objective 128, collection optics 130, and a detector 132. The collection path may collect light from a focal region 126 which is illuminated by the illumination beam 124.

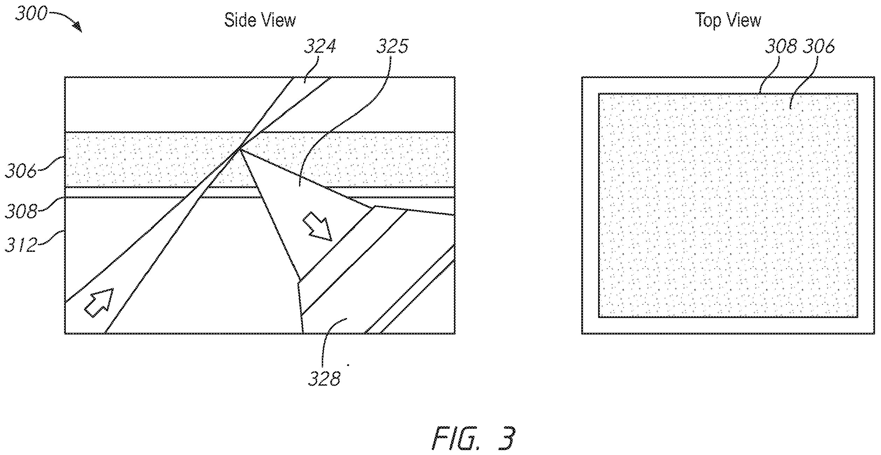

The microscope 102 includes a modular sample holder 108 which may be swapped out for various other modular sample holders 108. Examples of different types of modular sample holder 108 are discussed in more detail in Figures 3-10B. The sample holder 108 may be removably coupleable to a support member 109 of the microscope 102. The support member 109 may be placed along an upper surface of an immersion bath 110 which holds an immersion fluid 112. In some embodiments, the support member 109 may form a lid, or other upper enclosure of the immersion bath 110. The support member 109 may include an opening which exposes the immersion fluid 112. The opening may act as a receptacle for the modular sample holders 108. When the sample holder 108 is positioned in the receptacle, a lower surface of the sample holder 108 may be adjacent to the immersion fluid 112. In some embodiments, the lower surface of the sample holder 108 may contact the immersion fluid 112. For example, the lower surface of the sample holder 108 may extend into the immersion bath 110. In some embodiments, the support member 109 and/or sample holder 108 may include a gasket or other sealing member to prevent the immersion fluid 112 from escaping between the seam between the sample holder 108 and support member 109.

In some embodiments, the sample holder 108 may rest in the receptacle of the support member 109 without any kind of attachment (other than gravity). For example, a profile of the receptacle may be tapered and/or the receptacle may include a step which supports the sample holder 108. In some embodiments, one or more fasteners may be used to attach the sample holder 108 to the support member 109. For example, clips, screws, magnets, snaps, hook-and-loop fastener, or combinations thereof, may be used to removably couple the sample holder to the support member 109.

In some embodiments, the sample holder 108 may be a unitary body which directly fits into the receptacle of the support member 109. In some embodiments, an adapter plate may be used which fits in the receptacle of the support member 109 and which includes a receptacle for the sample holder 108. In some embodiments, the sample holder 108 may be attached to an adapter (e.g., with an adhesive). For example, the sample holder 108 may be bonded to an adapter along an outer perimeter of the sample holder 108 with an UV cured adhesive. In some embodiments, the sample holder 108 may be a commercial sample holder which is made modular via the use of an adapter. In some embodiments, the adapter may include mounting hardware (e.g., fasteners) which mate with the support member 109.

The support member 109 may have a recessed area which holds the sample holder 108. The modular sample holders 108 may slot into the recessed area. In some embodiments, the sample holder 108 may be shaped to limit the orientations of the sample holder 108 relative to the support member 109 (and to the illumination and collection paths). For example, the sample holder 108 may be square to limit the placement of the sample holder 108 to one of four orientations, rectangular to limit the placement of the sample holder 108 to one of two orientations, or any other shape. In some embodiments, the sample holder 108 may be shaped such that there is only one orientation in which the sample holder 108 fits in the receptacle of the support member 109.

The source 118 provides illumination light along the illumination path to illuminate a focal region 126 of a sample 106. The source 118 may be a narrow band source, such as a laser or a light emitting diode (LED) which may emit light in a narrow spectrum. In some embodiments, the light may be a broadband source (e.g., an incandescent source, an arc source) which may produce broad spectrum (e.g., white) illumination. In some embodiments, one or more portions of the illumination light may be outside of the visible range. In some embodiments, a filter (not shown) may be used as part of the illumination path to further refine the wavelength(s) of the illumination light. For example, a bandpass filter may receive broadband illumination from the source 118, and provide illumination light in a narrower spectrum. In some embodiments, the light source 103 may be a laser, and may generate collimated light.

In some embodiments, the optical system 100 may be used to image fluorescence in the sample 106. The illumination beam 124 may include light at a particular excitation wavelength, which may excite flourophores in the sample 106. The illumination beam 124 may include a broad spectrum of light which includes the excitation wavelength, or may be a narrow band centered on the excitation wavelength. In some embodiments, the light source 118 may produce a narrow spectrum of light centered on (or close to) the excitation wavelength). In some embodiments, filter(s) (not shown) may be used in the illumination optics 120 to limit the illumination beam 124 to wavelengths near the excitation wavelength. Once excited by the illumination sheet, the fluorophores in the sample 106 may emit light (which may be centered on a given emission wavelength). The collection path (e.g., collection optics 130) may include one or more filters which may be used to limit the light which reaches the detector 132 to wavelengths of light near the emission wavelength.

The illumination optics 120 may couple the light from the source 118 to the illumination objective 122. For example, the illumination optics 120 may include an optical fiber which carries light from the source 118 to a back end of the illumination objective 122. In some embodiments, the illumination optics 120 may couple the light between the source 118 and the objective 122 without substantially altering the light provided by the source 118. In some embodiments, the illumination optics 120 may alter the shape, wavelength, intensity and/or other properties of the light provided by the source 118. For example, the illumination optics 120 may receive broadband light from the source 118 and may filter the light (e.g., with a filter, diffraction grating, acousto-optic modulator, etc.) to provide narrow band light to the objective 122.

In some embodiments, the illumination path may provide an illumination beam 124 which is a light sheet as part of light sheet micrsocopy or light-sheet fluorescent microscopy (LSFM). The light sheet may have a generally elliptical cross section, with a first numerical aperture along a first axis (e.g., the y-axis) and a second numerical aperture greater than the first numerical aperture along a second axis which is orthogonal to the first axis. The illumination optics 120 may include optics which reshape light received from the source 118 into an illumination sheet. For example, the illumination optics 120 may include one or more cylindrical optics which focus light in one axis, but not in the orthogonal axis.

In some embodiments, the illumination optics 120 may include scanning optics, which may be used to scan the illumination beam 124 relative to the sample 106. For example, the region illuminated by the illumination beam may be smaller than the desired focal region 126. In this case, the illumination optics 120 may rapidly oscillate the illumination beam 124 across the desired focal region 126 to ensure illumination of the focal region 126.

The illumination objective 122 may include one or more lenses which provide the illumination beam 124. For example, the illumination objective 122 may focus the illumination beam 124 towards the focal region 126. The sample holder 108 may position the sample 106 such that the focal region 126 is generally within the sample 106. The illumination objective may, in some embodiments, be a commercial objective lens which includes one or more internal optical elements. In some embodiments, the focal region 126 may be idealized as a focal point. In some embodiments, the focal region 126 may be generally planar in shape. For example, in LSFM, the focal region 126 may be a plane lying along the plane of the light sheet generated as the illumination beam 124.

In some embodiments, the illumination objective 122 may be surrounded by an ambient environment (e.g., air), and the illumination objective 122 may be an air objective. The illumination objective 122 may be characterized by one or more numerical apertures, which may be based on the angle(s) at which light converges at the focal region 126. In some embodiments where the illumination objective 122 is in an ambient environment outside the illumination fluid 112, then a window or lens may be used to couple the illumination beam 124 into the immersion fluid 112. For example, the illustration of Figure 1 shows an illumination solid-immersion lens (SIL) 114 positioned along the illumination path. In some embodiments, the illumination objective 122 may be an immersion objective in contact with the immersion fluid 112 (e.g., similar to how the collection objective 128 is shown, as described in more detail herein), and the SIL 114 may be omitted.

The illumination beam 124 may be directed to pass through the illumination SIL 114 and into the immersion fluid 112. The illumination SIL 114 may be shaped to minimize the refraction of light passing from the ambient environment which includes the illumination objective 122 (e.g., air) through the material of the illumination SIL 114 and into the immersion fluid 112. The illumination beam 124 may then pass through the immersion fluid 112 towards the sample 106 and sample holder 108.

The illumination beam 124 may be directed onto the sample 106. The sample 106 may be supported by the sample holder 108. In some embodiments, the sample 106 may be placed directly onto the upper surface of the sample holder 108. In some embodiments, the sample 106 may be packaged in a container (e.g., on a glass slide, in a well plate, in a tissue culture flask, etc.) and the container may be placed on the sample holder 108. In some embodiments, the container may be integrated into the sample holder 108. In some embodiments, the sample 106 may be processed before imaging on the optical system 100. For example, the sample 106 may be washed, sliced, and/or labelled before imaging.

In some embodiments, the sample 106 may be a biological sample. For example, the sample 106 may be a tissue which has been biopsied from an area of suspected disease (e.g., cancer). In some embodiments, the tissue may undergo various processing, such as optical clearance, tissue slicing, and/or labeling before being examined by the optical system 100. In some embodiments, examination of the tissue with the optical system 100 may be used for diagnosis, to determine treatment progress, to monitor disease progression, etc.

In some embodiments, the sample 106 may be non-biological. For example, the sample 106 may be a fluid, and may contain one or more components for investigation. For example, the sample 106 may be a combustion gas, and the optical system 102 may perform particle image velocimetry (PIV) measurements to characterize components of the gas.

In some embodiments, the sample 106 may include one or more types of flourophores. The flourophores may be intrinsic to the sample 106 (e.g., DNA and proteins in biological samples) or may be a fluorescent label (e.g., acridine orange, Eosin) applied to the sample 106. Some samples 106 may include a mix of intrinsic types of flourophores and fluorescent labels. Each type of fluorophore may have an excitation spectrum, which may be centered on an excitation wavelength. When a fluorophore is excited by light in the excitation spectrum, it may emit light in an emission spectrum, which maybe centered on an emission wavelength which is different than (e.g., red-shifted from) the excitation wavelength.

The sample holder 108 may support the sample 106 over a material of the sample holder which is generally transparent to the illumination beam 124 and to the light collected from the focal region 126 of the sample 106. In some embodiments, the sample holder 108 may have a window of the transparent material which the sample 106 may be positioned over, and a remainder of the sample holder 108 may be formed from a non-transparent material. In some embodiments, the sample holder 108 may be made from a transparent material.

The sample holder 108 may have a second surface (e.g., a lower surface) which is opposite the surface of the sample holder 108 which supports the sample 106. An immersion chamber 110 which holds an immersion fluid 112 may be positioned below the second surface of the sample holder 108. In some embodiments, the immersion chamber 110 may have an open top, and the immersion fluid 112 may be adjacent to the second surface of the sample holder 108. In some embodiments, while the second surface of the sample holder 108 may be in contact with the immersion fluid 112, the first surface of the sample holder 108 (which supports the sample 106) may be in contact with the same environment as the objectives 122 and 128 (e.g., air).

The support member 109 may be coupled to an actuator 107, which may be capable of moving the support member 109 and/or sample holder 108 in one or more directions. In some embodiments, the sample holder 108 may be movable in up to three dimensions (e.g., along the x, y, and z axes) relative to the immersion chamber 110 and objectives 122 and 128. The sample holder 108 may be moved to change the position of the focal region 126 within the sample 106 and/or to move the sample holder 108 between a loading position and an imaging position. In some embodiments, the actuator may be a manual actuator, such as screws or coarse/fine adjustment knobs. In some embodiments, the actuator may be automated, such as an electric motor, which may respond to manual input and/or instructions from a controller 104. In some embodiments the actuator 107 may respond to both manual adjustment and automatic control (e.g., a knob which responds to both manual turning and to instructions from the controller 104).

The immersion chamber 110 contains the immersion fluid 112. In some embodiments, the immersion chamber 110 may include a source and/or sink, which may be useful for changing out the immersion fluid 112. For example, the immersion chamber 110 may be coupled to a fluid input line (which in turn may be coupled to a pump and/or reservoir) which provides the immersion fluid 112 and a drain which may be opened to remove the immersion fluid 112 from the immersion chamber 110. As described in more detail herein, the type of immersion fluid may be chosen based on a refractive index of the sample 106 and/or sample holder 108.

The collection path may receive light from a focal region 126 and direct the received light onto a detector 132 which may image and/or otherwise measure the received light. The light from the focal region 126 may be a redirected portion of the illumination beam 124 (e.g., scattered and/or reflected light), may be light emitted from the focal region 126 in response to the illumination beam 124 (e.g., via fluorescence), or combinations thereof. The collected light may pass through the sample holder 108 and immersion fluid 112 before reaching the collection objective 128. In some embodiments, the collection objective 128 may be an immersion objective, which has a front end positioned adjacent to the immersion fluid 112. For example, a front end of the collection objective 128 may be positioned inside the immersion bath 110. In some embodiments, the collection objective 128 may be an air objective, and a lens or window may be positioned between the immersion fluid 112 and the front end of the collection objective 128.

The geometry of the focal region 126 may be defined in part by the field of view of the collection path, which in turn may depend in part on the numerical aperture of the collection objective 128. Similar to the illumination objective 122, the collection objective 128 may be a commercial objective which includes one or more lenses. In some embodiments, the collection objective 128 may be an air objective. In some embodiments, the focal region which the collection path is focused on and the focal region which the illumination path is focused on may generally overlap at the focal region 126. In some embodiments, the illumination and collection paths may have different shapes, sizes, and/or locations of their respective focal regions.

The collection path includes collection optics 130 which may redirect light from the collection objective onto the detector 132. For example, the collection optics 130 may be a tube lens designed to focus light from the back end of the collection objective into an image which is projected on the detector 132. In some embodiments, the collection optics 130 may include one or more elements which alter the light received from the collection objective 128. For example, the collection optics 130 may include filters, mirrors, de-scanning optics, or combinations thereof.

The detector 132 may be used for imaging the focal region 126. In some embodiments, the detector 132 may represent an eyepiece, such that a user may observe the focal region 126. In some embodiments, the detector 132 may produce a signal to record an image of the focal region 126. For example, the detector 132 may include a CCD or CMOS array, which may generate an electronic signal based on the light incident on the array.

The illumination path may direct light along a first optical axis. The collection path may collect light along a second optical axis. In some embodiments, such as the one shown in Figure 1, the first optical axis and the second optical axis may be orthogonal to each other. Each of the first optical axis and the second optical axis may also be non-orthogonal to the sample holder. For example, the first optical axis may be at a 45° angle with respect to the bottom surface of the sample holder 108 and the second optical axis may also be at a 45° angle with respect to the bottom surface of the sample holder 108. Other angles between the first optical axis, second optical axis, and/or sample holder 108 may be used in other examples.

In some embodiments, the illumination and collection paths may be non-orthogonal to each other. For example, the illumination path may follow a first optical axis which is at a 45° angle with respect to the bottom surface of the sample holder, while the collection path may follow a second optical axis which is at a 90° angle with respect to the bottom surface of the holder. Accordingly, there may be about a 45° angle between the first and the second optical axes.

In some embodiments, one of the objectives 122 and 128 may be an air objective, while the other objective may be a non-air objective (e.g., an immersion objective). The non-air objective may, in some embodiments, be immersed (or have a front surface in contact with) the immersion fluid 112. In some embodiments, the air objective may have a SIL positioned between the objective and the immersion fluid, while a SIL may not be used with the non-air objective. For example, the illumination obj ective 122 may direct an illumination beam 124 through an illumination SIL 114 and into an immersion fluid 112, while the collection objective 128 may be adjacent to (e.g., in contact with) the immersion fluid 112.

The microscope 102 may be coupled to a controller 104 which may be used to operate one or more parts of the microscope 102, display data from the microscope 102, interpret data from the microscope 102, or combinations thereof. In some embodiments, the controller 104 may be separate from the microscope, such as a general purpose computer. In some embodiments, one or more parts of the controller 104 may be integral with the microscope 102.

The controller 104 includes one or more input/output devices 142, which may allow a user to view feedback from the controller 104, data from the microscope 102, provide instructions to the controller 104, provide instructions to the microscope 102, or combinations thereof. For example, the input/output device 142 may include a digital display, a touchscreen, a mouse, a keyboard, or combinations thereof.

The controller 104 includes a processor 140, which may execute one or more instructions stored in a memory 144. Instructions may include control software 152, which may include instructions about how to control the microscope 102. Based on the control software 152, the processor 140 may cause the controller 104 to send signals to various components of the microscope 102, such as the actuator 109. Instructions may include image processing software 150, which may be used to process images 146 either 'live' from the detector 132 or previously stored in the memory 144. The image processing software 150 may, for example, remove background noise from an image 146. Instructions may include analysis software 148, which may be executed by the processor 140 to determine one or more properties of the images 146. For example, the analysis software 148 may highlight cell nuclei in an image 146.

In some embodiments, the controller 104 may direct the microscope to collect images from a number of different fields of view in the sample. For example, the controller 104 may include instructions to collect a depth stack of images. The controller 104 may direct the detector 132 to collect a first image, and then instruct the actuator 109 to move the sample holder 108 a set distance in a vertical direction (e.g., along the z-axis). This may also move the sample 106 relative to the focal region 126 which may change the height within the sample at which the focal region 126 is located. The controller 104 may then instruct the detector 132 to collect another image and then repeat the process until a set number of images in the stack and/or a set total displacement in the z-direction have been achieved. The analysis software 148 may then combine the depth stack of images to allow for 3D (or pseudo-3D) imaging of the sample 106.

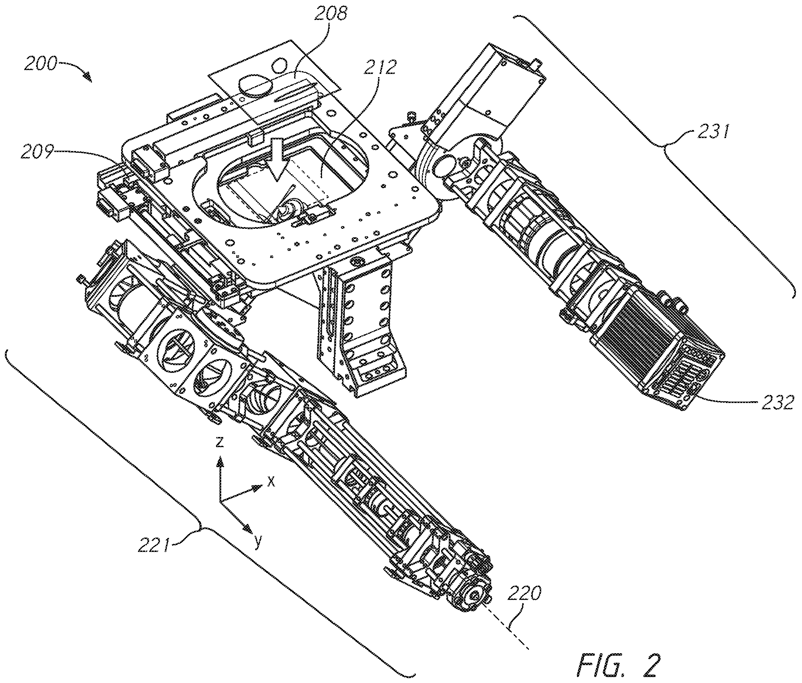

**Figure 2** is a perspective view of a microscope with a modular sample holder according to some embodiments of the present disclosure. In some embodiments, the microscope 200 shows an example layout of how a microscope such as the microscope 102 of Figure 1 may be assembled. The components and operations of the microscope 200 may, in some embodiments, be generally similar to the components and operations of the microscope 102 of Figure 1. For the sake of brevity, components and operations described with respect to the microscope 102 of Figure 1 will not be repeated again with respect to Figure 2.

The microscope 200 includes illumination optics 221, which are coupled to an illumination source 220. The illumination source 220 may be a fiber optic cable coupled to a laser (not shown in Figure 2). The illumination optics 221 may include a telescope and/or beam expander to couple the light out of the illumination source 220. The illumination optics 221 may include shaping optics to shape the illumination light into a light sheet. The illumination optics 221 may include one or more scanning optics, which may be motorized in order to scan the illumination light sheet across a back end of the illumination objective (not shown), which in turn may scan the illumination light sheet across the sample.

The illumination light sheet passes through an immersion bath 212, which is positioned below a support member 209. The support member 209 may be a stage, such as a motorized stage. For example, the stage may move in one or more axes, such as an XY stage. In some embodiments, where the support member 209 is motorized in some axes, movement in other axes may be added by coupling one or more parts of the microscope 200 to an additional actuator (such as a Z axis actuator).

The view of Figure 2 shows a sample holder 208 positioned above a receptacle of the support member 209. The sample holder 208 is shown as a flat plate which may be lowered into the receptacle of imaging. Different sample holder types which may be used with microscope 200 are discussed in more detail in Figures 3-10B.

The microscope 200 includes collection optics 231, which collect light from a focal region of the microscope 200 and provide that collected light to a detector 232. The collection optics 231 may include a filter wheel, which includes a number of filters which may be rotated into the collection path of the microscope 200. Each filter may be associated with a different emission spectrum (e.g., of a different type of fluorophore that may be imaged). The detector 232 may be a sCMOS detector in some embodiments.

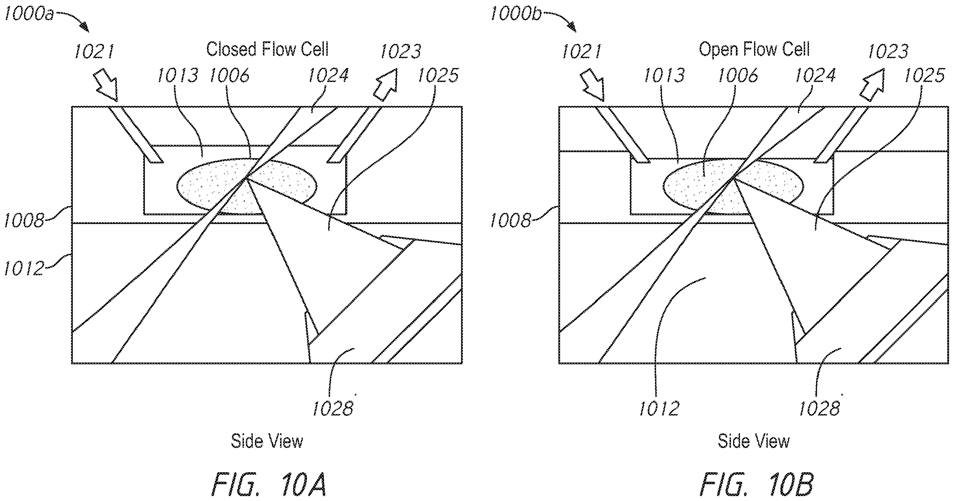

**Figures 3-10B** show various sample holders which may, in some embodiments, be used as the sample holder 108 of Figure 1 and/or 208 of Figure 2. Figures 3-9 show both a top view of the sample holder and a side view of a portion of the sample holder. The side view shows a cross-section of a portion of the sample holder which includes a sample. The side views show the sample holder when it is placed in a microscope (e.g., the microscope 102 of Figure 1 and/or 200 of Figure 2) and when the microscope is aligned such that the focal region of the microscope is within the sample shown in the cross-sectional side view. Figures 10A-10B show a pair of side views of two variations of a sample holder rather than a top and side views.

The views of Figures 3-10B show a portion of the sample holder which does not include the means by which the sample holder is mounted to the microscope. In some embodiments, the sample holders may slot into a receptacle of the microscope. In some embodiments, the sample holders may include mounting hardware (not shown) which slots into the receptacle and/or attaches to the support member of the microscope (e.g., via clips, magnets, pins, screws, etc.). For example, the sample holders may be attached to an adapter plate, which may in turn fit into the receptacle and/or include attachment hardware.

Each of the Figures 3-10B show an example embodiment with an air illumination objective and an immersion collection objective. However it should be understood that any combination of air and immersion objectives may be used for the illumination and collection paths. Each of the Figures 3-10 show a generally rectangular top view of the sample holder, however it should be understood that Many features and operations may be similar between the various sample holders, and for the sake of brevity, such features will not be described separately for each of the Figures 3-10.

For example, each of the sample holders in Figures 3-10B include various materials such as the material of the sample holder, the immersion fluid, the sample, a fluid surrounding the sample, etc. Each of these materials may have a refractive indices and a dispersion. For any given sample holder, two or more materials may be selected such that they have a same or similar index of refraction and/or dispersion.

In some embodiments, a single sample holder may have a mix of the geometries and features described in Figures 3-10B. For example, a sample holder may have a first region with a first geometry for holding the sample, and a second region with a second geometry for holding the sample.

In some embodiments, one or more surfaces of the sample holder may include one or more coatings. For example, a hydrophobic coating may be placed on the sample holder to encourage sample spotted on the sample holder to bead up.

**Figure 3** is a side view and a top view of a modular sample holder with a flat surface according to some embodiments of the present disclosure. The views 300 show a sample holder 308 which is generally planar. For example, the sample holder 308 may be a transparent plate and the sample 306 may be supported on an upper surface of the plate. When a planar sample holder 308 is used, the microscope may operate in a manner analogous to a flat-bed scanner, where a sample may be placed on the upper surface of the sample holder 308. In some embodiments, multiple samples 306 may be placed on the sample holder 308 and may be separated from each other by air. In some embodiments, the sample 306 may include a liquid phase, and the sample 306 may be droplet deposited on the surface of the sample holder 308.

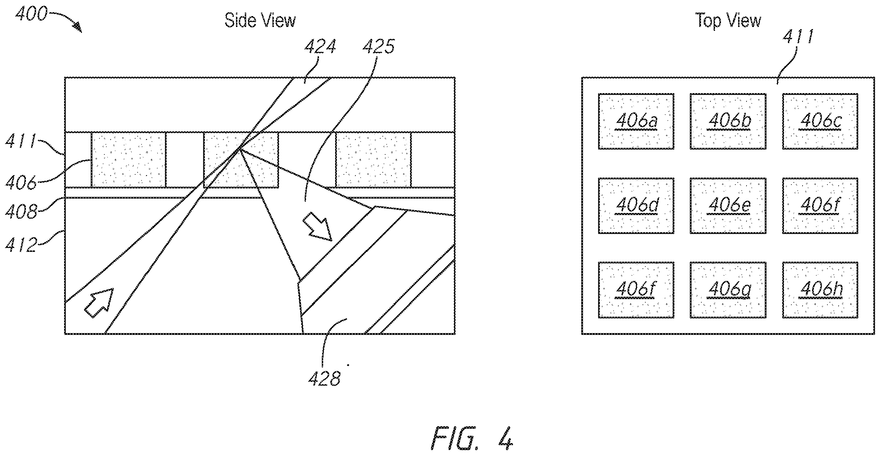

**Figure 4** is a side view and a top view of a modular sample holder with sample wells according to some embodiments of the present disclosure. The sample holder 408 may be generally planar (e.g., similar to the sample holder 308 of Figure 3), however the sample holder 408 includes a surrounding medium 411 which may form regions which contain each sample 406. For example, the sample holder 408 may have defined sample regions which are separated from each other by the surrounding medium 411. In some embodiments, the surrounding medium 411 may be the same material as the rest of the sample holder 408. In some embodiments, the sample holder 408 may be a flat plate of a first material which the surrounding medium 411 may be attached to an upper surface of.

The sample holder 408 may include one or more different sample regions, each of which may have a different sample (or samples) 406a-h placed in it. For example, the sample holder 408 may be a well plate, which may hold a number of different samples 406a-h.

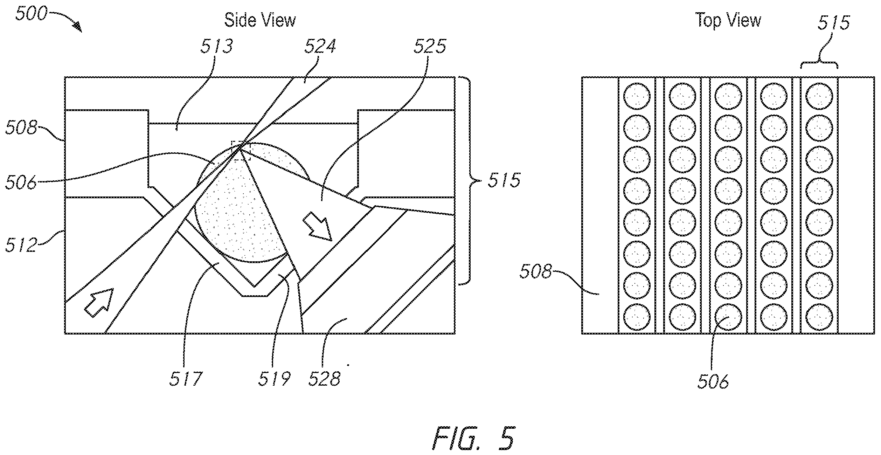

**Figure 5** is a side view and a top view of a modular sample holder with sample troughs according to some embodiments of the present disclosure. The sample holder 508 of Figure 5 includes a plurality of sample troughs 515, each of which may hold one or more samples 506. The sample troughs 515 have a bottom with a first optical surface 517 and a second optical surface 519, which may help couple the illumination beam 524 and collected light 525 to/from the sample 506 respectively.

The side view of Figure 5 shows a cross-section of a single one of the troughs 515. The trough may be filled with a fluid 513. The fluid 513 may be the same or different than the immersion fluid 512. In some embodiments, the fluid 513 may have an index of refraction which is matched to the index of the refraction of the sample 506. In some embodiments, the fluid 513 may have a different index of refraction than the sample 506. In some embodiments, the fluid 513 may have an index of refraction which is the same as the material of the sample holder 508 and/or the immersion fluid 512. The fluid 513 may be used to support, stabilize, and/or protect the samples 506 during imaging. For example, the sample 506 may be cells, and the fluid 513 may represent a cell culture medium. In some embodiments the fluid 513 may be an ambient medium such as air.

The trough 515 has a first optical surface 517 which is along the illumination path of the illumination beam 524 between the immersion fluid 512 and the sample 506 (and/or between the immersion fluid 512 and the fluid 513). The first optical surface 517 may be positionable such that the first optical surface 517 is generally perpendicular to the optical axis of the illumination path. This may reduce the refraction of light as it passes from the immersion fluid 512 into the material of the sample holder 508. In some embodiments, the first optical surface 517 may be a flat surface with a uniform thickness.

The trough 515 has a second optical surface 519 which is along the collection path of the collected light 525, between the sample 506 (and/or fluid 513) and the immersion fluid 512. The second optical surface 519 may be positionable such that the second optical surface 519 is generally perpendicular to the optical axis of the collection path. This may reduce the refraction of light as it passes from the sample 506/fluid 513 into the material of the sample holder 508 and immersion fluid 512. In some embodiments, the second optical surface 519 may be a flat surface with a uniform thickness.

The first optical surface 517 and the second optical surface 519 may be made of the same material as the remainder of the sample holder 508. For example, the sample holder 508 may be a unitary body shaped from a single piece of material. In some embodiments, the first and the second optical surfaces 517 and 519 may be made from a different material than a remainder of the sample holder 508. For example, the first and the second optical surfaces 517 and 519 may be made from a transparent material, while a remainder of the sample holder 508 is made from a non-transparent material.

The first and the second optical surfaces 517 and 519 may form a 'bottom' of the trough 515. The first and the second optical surfaces 517 and 519 may meet at an angle, which may be based on the angle between the illumination and collection paths. For example, the first optical surface 517 may be at an angle of about 90° with respect to the second optical surface 519. In some embodiments, the first and the second optical surfaces 517 and 519 may not directly intersect, and an additional piece of material may separate them. For example, an additional piece of material may be added which is generally parallel to a bottom surface of the non-trough parts of the sample holder 508, giving the bottom of the trough 515 a generally trapezoidal cross section rather than a triangular cross section.

The troughs 515 may run along a length of the sample holder 508. In some embodiments, each trough 515 may be closed off to prevent the fluid 513 and/or samples 506 from escaping from the trough 515. For example, each trough 515 may end a distance from an edge of the sample holder 508, such that the material of the sample holder 508 encloses the trough 515. In some embodiments, one or more end caps may be attached to the sample holder 508 to enclose the trough 515. In some embodiments, the bottom of each trough 515 may extend from the bottom of the sample holder 508 (e.g., to form a series of ridges extending along the bottom surface of the sample holder 508).

The trough 515 may have a long axis which runs across the length of the sample holder 508. The sample holder may be alignable in the microscope (e.g., in the receptacle of the support member 109 of Figure 1 and/or 209 of Figure 2), the long axis may generally be perpendicular to the illumination and collection paths from a 'top-down' perspective. For example, the long axis of the trough 515 may be perpendicular to a line drawn between the illumination objective and collection objective when the sample holder 508 is placed in the microscope. In some embodiments, the sample holder 508 may include multiple troughs 515. In some embodiments, the troughs may generally be parallel to each other.

Once the sample holder 508 is placed in the microscope, the sample holder 508 may be moved (e.g., by actuator 107 of Figure 1) to image different regions of the sample 506 and/or different samples. The different samples may be in a same trough 515 or different troughs of the sample holder 508. As the sample holder 508 is moved with respect to the immersion fluid 512, the first and second optical surfaces 517 and 519 may move relative to the illumination and collection paths. Since the first and the second optical surfaces 517 and 519 are flat and perpendicular to their respective optical paths, the movement of the optical surfaces 517/519 may lead to relatively little aberration since the illumination and collection paths will continue to encounter a flat surface perpendicular to their respective optical axes. The imageable area of the sample 506 may be based, in part, on the area over which the imaging beam 524 and/or collected light 525 can move relative to the first optical surface 517 or second optical surface 519 respectively without interfering with the non-optical surface part of the sample holder 508 and/or the other optical surface.

In some embodiments, the first and the second optical surfaces 517 and 519 may be useful to reduce a working distance of the focal region to the illumination objective (not shown in Figure 5) and/or collection objective 528 respectively. For example, the working distance of one or both of the objectives may be about 5-15 mm. Larger or smaller working distances may be used in other example embodiments. In some embodiments, the objective may be an immersion objective, and the objective may have a front surface which is positioned close to the optical surface. In some embodiments, the optical surface may be approximately parallel to a front surface (e.g., a front lens) of the objective. For example, in embodiments where the objective is an air objective and is separate from the immersion fluid by a window or lens (e.g., a SIL), a surface of the window/lens may be close to the optical surface.

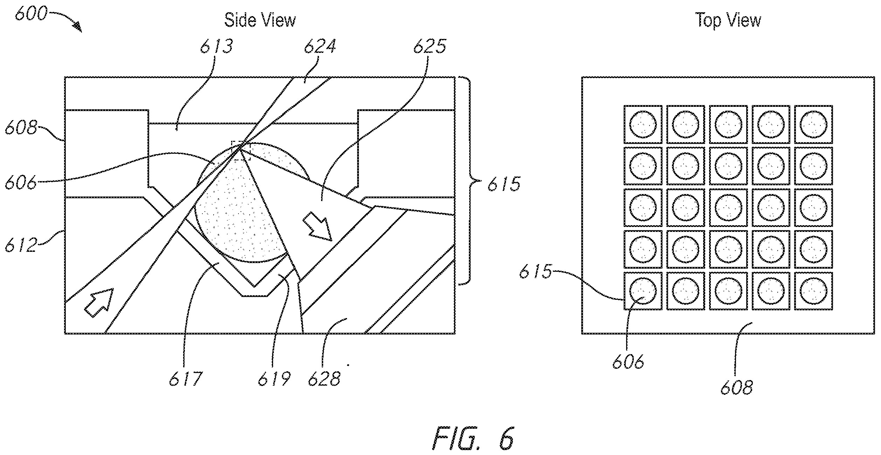

**Figure 6** is a side view and a top view of a modular sample holder with wells with trough bottoms according to some embodiments of the present disclosure. Figure 6 shows a sample holder 608 which is generally similar to the sample holder 508 of Figure 5, except that rather than an elongated trough, the sample holder 608 has a number of separate wells 615, each of which has a first optical surface 617 and a second optical surface 619, which are generally similar to the first and second optical surfaces of Figure 5.

Each well 615 may hold a different sample 606. Each well may have a first and second optical surface 617 and 619 which are generally perpendicular to the illumination and collection paths respectively. In some embodiments, the optical surfaces 617 and 619 may extend along the length of the sample holder 608. For example, the sample holder 608 may have a similar shape to the sample holder 508 of Figure 5, except that the sample holder 608 may have 'walls' positioned along the trough to separate the trough into the different wells 615. In some embodiments, the optical surfaces 617 and 619 may stop between each of the wells. In some embodiments, each of the wells 615 may have a rectangular cross section from a top-down perspective. In some embodiments, other cross-sectional shapes may be used.

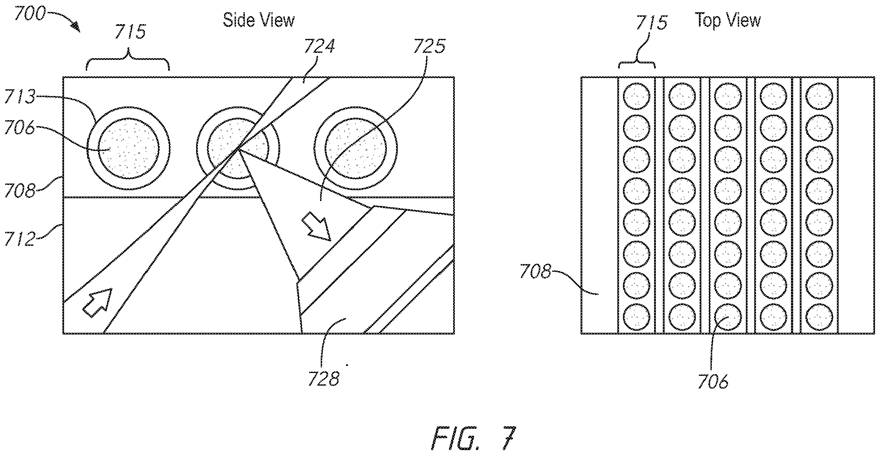

**Figure 7** is a side view and a top view of a modular sample holder with flow channels according to some embodiments of the present disclosure. The sample holder 708 may include one or more channels 715 which are enclosed within the material of the sample holder 708. Each channel 715 may be loaded with one or more samples 706, which may be surrounded in a fluid 713.

The sample holder 708 may include channels 715 which are formed in the material of the sample holder 708. For example, a perimeter of the channel 715 may be formed from the material of the sample holder 708. In some embodiments, the channels 715 may have a circular cross-section. Other shapes of cross-section may be used in other example embodiments. In some embodiments, the channels 715 may have a shape and/or size based on the expected properties of the sample 706. For example, if the sample 706 is cellular, then the channels 715 may have a diameter such that the cells of the sample 706 pass 'single-file' down the length of the channel 715. In some embodiments, the channels 715 may be part of a microfluidic system which runs through the sample holder 708. For example, the sample holder 708 may be a microfluidic chip, and the channels 715 may represent microfluidic flow channels through transparent regions of the chip which may be imaged.

In some embodiments, the sample holder 708 may include ports which may be used to load the samples 706 (and/or fluid 713) into the channels 715 or to empty the channels 715. In some embodiments, the channels may change size and/or shape along their length. In some embodiments, there may be several separate channels 715. For example a number of parallel channels 715, similar to the parallel troughs 515 of Figure 5. In some embodiments, there may be one long channel 715 with several parallel sections (e.g., the channel 715 may switch back upon itself one or more times).

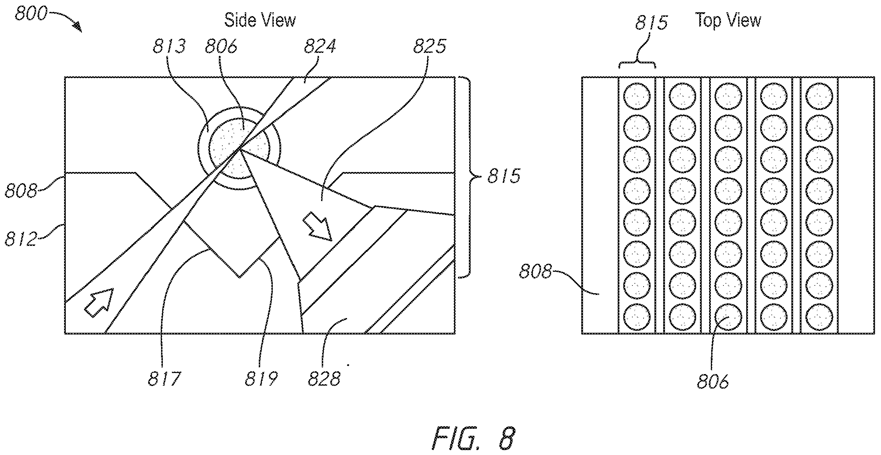

**Figure** 8 is a side view and a top view of a modular sample holder with flow channels and optical surfaces according to some embodiments of the present disclosure. The sample holder 808 has channels (similar to the channels 715 of Figure 7) as well as a first and second optical surface 817 and 819 (similar to the optical surfaces 517 and 519 of Figure 5 and 617/619 of Figure 6).

The first optical surface 817 and the second optical surface 819 may, in some embodiments, be facets of a protrusion of the material of the sample holder 808 material extending from a bottom surface of the sample holder 808. The channels 815 may have a shape which does not have flat surfaces corresponding to the first and the second optical surfaces 817 and 819. For example, as shown in Figure 8, the channel 815 may have a circular cross-section, while the first and second optical surfaces 817 and 819 may form a protrusion with a generally triangular cross section.

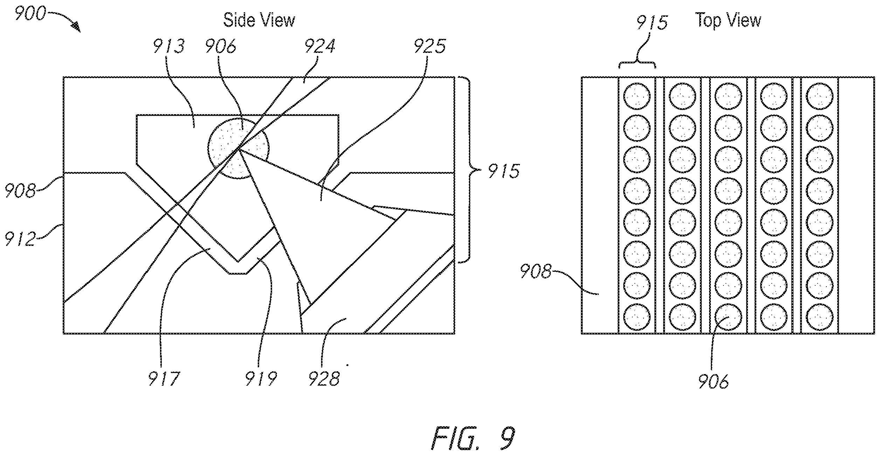

**Figure 9** is a side view and a top view of a modular sample holder with flow channels and optical surfaces according to some embodiments of the present disclosure. The sample holder 908 of Figure 9 may generally be similar to the sample holder 808 of Figure 8, except that the channel 915 of the sample holder 908 is shaped such that the first optical surface 917 and the second optical surface 919 have back surfaces which are parallel to their front surfaces. For example, the channel 915 may have the same general cross section as the troughs 515 of Figure 5 and/or the wells 615 of Figure 6, except that the channel 915 has a 'lid'. In some embodiments, the channel 915 may be cut through the material of the sample holder 908, and the sample holder 908 may be a unitary body. In some embodiments, the channel 915 may be covered over by a 'lid', which may be the same or different as the material of the rest of the sample holder 908.

**Figures 10A-10B** show cross-sectional side views of sample holders with flow cells which are open and closed respectively, according to some embodiments of the present disclosure. The sample holders 1000a and 1000b may be generally similar to each other, except that the sample holder 1000a is enclosed by the material of the sample holder, while the sample holder 1000b is open to an ambient environment (e.g., the air). For the sake of brevity, only the flow cell 1000a will be described in detail. In some embodiments, the flow cells of the sample holders 1000a (or 1000b) may be incorporated into any of the geometries of the sample holders 308-908 of Figures 3-9, respectively.

The sample holder 1000a includes an inlet 1021 and an outlet 1023. The inlet may provide a circulating fluid 1013 to the chamber, while the outlet 1023 may remove the circulating fluid 1013. In this manner the circulating fluid 1013 may flow through the chamber. In some embodiments, one or more different circulating fluid(s) 1013 may be flowed across the sample 1008 to perform automated processing of the sample. For example, the sample 1008 may be labelled in situ by flowing different reagents across the sample 1008.

In some embodiments, the sample holders 1000a and 1000b may include inlet port 1021 and outlet port 1023, which may mate with corresponding inlet and outlet ports of the microscope when the sample holders 1000a and 1000b are positioned in the microscope.

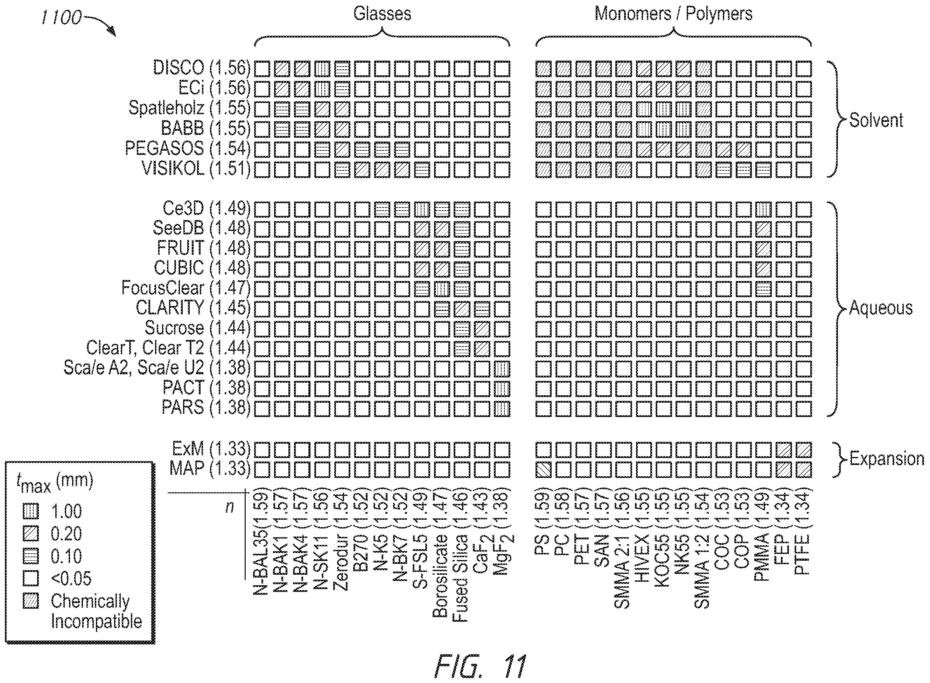

**Figure 11** is a chart of the compatibility of different immersion fluids and sample holder materials according to some embodiments of the present disclosure. The chart 1100 may be based on optical modeling of the interaction of different immersion fluids (e.g., 112 of Figure 1) and different sample holder (e.g., 108 of Figure 1) materials. In some embodiments where the sample holder includes more than one type of material, the sample holder materials may represent materials used in the part(s) of the sample holder which interact with the illumination and collection paths. For example, the sample holder materials may represent the materials of the first and the second optical surfaces (e.g., 517 and 519 of Figure 5).

The rows represent different types of immersion fluids, each listed along with their refractive index. The columns represent different types of sample holder material. The shading of each box at the intersection of an immersion fluid and sample holder material represents that maximum thickness of the sample holder material without significant aberration. The maximum thickness is expressed in millimeters, or shown as "chemically incompatible" for combinations which would cause the immersion fluid to damage the structure of the sample holder.

Various example values are given throughout the specification. It should be understood that these values are approximate, as perfect alignment may not be possible in a real-world system. Thus values such as 'normal' or 'orthogonal' should be interpreted as "approximately 90°" where the actual value may be within a tolerance of the desired angle. For example, two things which are described as orthogonal may be positioned anywhere from 85-95° with respect to each other. Other angles and measurements should be interpreted in a similar manner. Similarly, terms like 'light' are used throughout the specification to refer to electromagnetic radiation. Embodiments of the present disclosure are not limited to wavelengths within the visible spectrum. It should be understood that various example materials listed throughout the specification may have certain optical properties over certain ranges of wavelengths, and that other materials may be used based on the wavelength(s) of electromagnetic radiation utilized. For example, if radiation in the far UV is used, then the optical surface(s) of the sample holder may be made from a material transparent to the far UV.

### EXAMPLES

Example details are given which may be used to implement, operate, and/or model one or more aspects described herein. It should be understood that the specific details described herein are for a particular example only, and that the described details may be different for other example embodiments.

### Multi-immersion open-top light-sheet microscope

An optical schematic of a microscope with modular sample holders is modeled using ray-tracing software. Illumination light is coupled into the system by a single-mode fiber with a numerical aperture of 0.12 from a digitally controlled laser package. Light emanating from the fiber (Gaussian profile) is collimated with a lens, L1 ( f = 19 mm), and then expanded along one axis using a 3× cylindrical telescope consisting of lenses, C1(f = 50 mm) and C2 (f = 150 mm) to provide multi-directional illumination. The resulting elliptical Gaussian beam is then relayed to the scanning galvanometer, GM using lenses R1 (f = 100 mm) and R2 (Thorlabs, f = 50 mm). The scanning mirror is driven by a sinusoidal voltage from a waveform generator at a frequency of 800 Hz. The scanning beam is relayed to the back focal plan of the illumination obj ective using a scan lens, SL (f = 70 mm) and tube lens, TL1 (f = 200 mm). Finally, the elliptical beam travels through a plano-convex lens (R = 34.5 mm), immersion medium, holder, and finally specimen.

Fluorescence is collected by a multi-immersion objective which provides <1 µm in-plane resolution for all immersion media and filtered with a motorized filter wheel with band-pass filters for the 405 nm, 488 nm, 561 nm, and 638 nm excitation wavelengths. The filtered fluorescence is focused onto a 2048×2048 pixel sCMOS camera by a tube lens, TL2 (f = 165 mm). The tube lens provides a Nyquist sampling of ∼0.45 µm/pixel, which provides a horizontal field of view of ∼0.9 mm over the 2048 pixels of the camera. The vertical field of view is reduced to 256 pixels match the depth of focus of the illumination light sheet (∼110 µm). The 256 pixels are oriented parallel to the rolling shutter readout direction of the camera, which provides an exposure time of 1.25 ms and a framerate of 800 Hz. The maximum imaging depth may be limited by the physical clearance of the holder and collection objective (0.5 cm). The illumination objective, SIL, and collection objective interface with the immersion chamber through aluminum mounts.

Image strips are collected with a combination of stage-scanning and lateral/vertical tiling using a motorized XY stage and Z actuators. The stage-scanning firmware is used to send a TTL trigger signal from the XY stage to the sCMOS camera for reproducible start positioning (<1 µm) of each image strip. The spatial interval between successive frames is set to ∼0.32 µm, which given the 800 Hz camera framerate, corresponds to a constant stage velocity of ~0.25 mm/sec. For lateral tiling, an offset of 0.8 mm between adjacent image strips is used (-11% overlap). For vertical tiling, the 110 µm depth of focus is oriented at 45 deg., which corresponds to an image strip height of ∼80-µm. Therefore, a vertical tiling offset of 70-µm is used (-12% overlap). The laser power is increased with depth per a user defined attenuation coefficient, *P = P₀* ×*exp*(*z*/*µ*), to account for the attenuation of the illumination light sheet as it penetrates deeper into the specimen. The entire image acquisition is controlled by a program. The program consists of a series of nested loops for imaging multiple specimens, collecting multiple color channels, and lateral/vertical tiling.

### Data processing and visualization

Collected datasets undergo a pre-processing routine before being visualized in 2D and 3D. Each image stripe is stored in a single DCIMG file. These DCIMG files are read into RAM by a DLL and first de-skewed at 45 deg. By setting the interval between successive frames, the de-skewing is performed by shifting each plane of pixels in the image strip by an integer pixel offset. This operation may be relatively fast compared to alternative de-skewing approaches using computationally expensive affine transformations. The data is then written from RAM to disk using the Hierarchical Data Format (HDF5) with the metadata and XML file structured for subsequent analysis using BigStitche. A custom HDF5 compression filter (B3D) is used with default parameters to provide ~10× compression which is within the noise-limit of the sCMOS camera. This pre-processing routine is applied to all DCIMG files, ultimately resulting in a single HDF5/XML file. The alignment of all image strips is performed, and finally fused to disk in either TIFF or HDF5 file formats. The resulting TIFF and HDF5 files are then visualized using open-source and commercial packages. To optionally provide false-colored pseudo-H&E histology images, a Beer-Lambert coloring algorithm may be applied.

### Sample holders

All holders are attached to the motorized XY stage using aluminum adapter plates. For the mouse brain slices, a 1-mm thick fused silica window with a 10×10-cm cross-section was attached to an adapter plate using UV-curing glue. Mouse organs cleared using Ce3D are imaged on a customized 6-well plate. The bottom of a polystyrene 6-well plate is removed and replaced with a 0.5-mm thick PMMA plate. For an expanded kidney specimen, a "drumhead" was fabricated and adapted for mounting to the microscope. The drumhead tightens a 0.1-mm thick FEP film over an extruded opening, which may be useful for imaging of expanded specimens. To overcome the hydrophobic nature of the FEP films (which can cause drifting of expanded specimens), the upper surface of the FEP films are treated with 0.1% (w/v) poly-lysine for charged-based adhesion of specimens to the FEP surface. For the human prostate biopsies, HIVEX lens blanks were purchased and machined. The system can also be used as a whole-slide scanner for conventional fluorescently labeled histology slides using a commercially available slide holder.

### Optical simulations

The optical simulations is performed using ray-tracing software with a "blackbox" model of the multi-immersion objective. For the simulations shown in Fig. 11, the base refractive-index of the immersion medium and specimen is assumed to be *n* = 1.45, and the optical path difference is varied. For all scenarios, the imaging depth is set to 1 mm, and the PSF was measured at the center of the imaging field of view. The same relationship between Strehl Ratio and optical path difference was observed for other base refractive-indices and imaging depths, under the assumption that the optical properties of the immersion medium and specimen were the same.

The particulars shown herein are by way of example and for purposes of illustrative discussion of the preferred embodiments of the present invention only and are presented in the cause of providing what is believed to be the most useful and readily understood description of the principles and conceptual aspects of various embodiments of the invention. In this regard, no attempt is made to show structural details of the invention in more detail than is necessary for the fundamental understanding of the invention, the description taken with the drawings and/or examples making apparent to those skilled in the art how the several forms of the invention may be embodied in practice.

Of course, it is to be appreciated that any one of the examples, embodiments or processes described herein may be combined with one or more other examples, embodiments and/or processes or be separated and/or performed amongst separate devices or device portions in accordance with the present systems, devices and methods.

It should be understood that terms like 'top' and 'side' are used for ease of explanation, and are only meant to indicate the relative positioning of various components. Other embodiments may use other arrangements of components. Various components and operations may be described with respect to certain wavelengths of light. It should be understood that other wavelengths (such as those outside the visible spectrum) would be used, and that light as used herein may represent any electromagnetic radiation. Certain materials may be described in terms of their optical properties (e.g., transparent) and it should be understood that materials with the desired properties may be chosen for any wavelength(s) of light used by the system.

Finally, the above-discussion is intended to be merely illustrative of the present system and should not be construed as limiting the appended claims to any particular embodiment or group of embodiments. Thus, while the present system has been described in particular detail with reference to exemplary embodiments, it should also be appreciated that numerous modifications and alternative embodiments may be devised by those having ordinary skill in the art without departing from the broader and intended spirit and scope of the present system as set forth in the claims that follow. Accordingly, the specification and drawings are to be regarded in an illustrative manner and are not intended to limit the scope of the appended claims.

Further particular and preferred aspects of the invention are set out in the accompanying independent and dependent clauses. Features of the dependent clauses may be combined with those of the independent clauses and independent claims as appropriate and in combinations other than those explicitly set out in the clauses and claims.
1. An apparatus comprising:
   illumination optics configured to direct illumination light along an illumination path to a sample;
   collection optics configured to receive light from the sample along a collection path;
   an immersion chamber configured to hold an immersion medium; and
   a sample holder, configured to support the sample, including a first surface and a second surface opposite the first surface, wherein the second surface is adjacent to the immersion medium, wherein the second surface includes a first optical surface along the illumination path which is generally perpendicular to the illumination path and a second optical surface along the collection path which is generally perpendicular to the collection path.
2. The apparatus of clause 1, further comprising a support member configured to support the sample holder in an orientation relative to the illumination path and the collection path.
3. The apparatus of clause 2, wherein the sample holder is a modular sample holder removably positionable in a receptacle of the support member.
4. The apparatus of clause 1, wherein the first optical surface is generally perpendicular to the second optical surface.
5. The apparatus of clause 1, wherein the immersion medium, the sample, the first optical surface, and the second optical surface, have a matched index of refraction.
6. The apparatus of clause 1, wherein the sample holder comprises an enclosed channel configured to contain the sample.
7. The apparatus of clause 6, wherein the enclosed channel is coupled to an inlet configured to provide a fluid to the channel and an outlet configured to drain the fluid from the channel.
8. The apparatus of clause 1, wherein the sample holder comprises a plurality of troughs.
9. The apparatus of clause 1, wherein the sample holder comprises a plurality of wells.
10. A system comprising:
   a microscope comprising a support receptacle and an immersion fluid, wherein the microscope is configured to direct an illumination beam along an illumination path through the immersion fluid towards a focal region and receive collected light from the focal region through the immersion fluid along a collection path; and
   a modular sample holder comprising:
      a sample chamber configured to support a sample; and
      a first optical surface and a second optical surface positioned along a side of the modular sample holder,
   wherein the modular sample holder is removably positionable in the support receptacle such that the focal region is positionable within the sample, the first and the second optical surfaces are adjacent to the immersion fluid, the first optical surface is along the illumination path and generally perpendicular to the illumination path, and the second optical surface along the collection path and generally perpendicular to the collection path.
11. The system of clause 10, wherein the illumination beam is a light sheet.
12. The system of clause 10, wherein the sample holder comprises a trough configured to hold the sample, and wherein the first optical surface and the second optical surface form a bottom of the trough.
13. The system of clause 10, wherein the sample holder comprises a well configured to hold the sample, and wherein the first optical surface and the second optical surface form a bottom of the well.
14. The system of clause 10, wherein the sample holder comprises a channel configured to hold the sample.
15. The system of clause 10, wherein the first optical surface is generally perpendicular to the second optical surface.
16. The system of clause 10, wherein the sample, the immersion fluid, the first optical surface, and the second optical surface have a matched index of refraction.
17. An apparatus comprising:
   illumination optics configured to provide illumination light to a sample;
   collection optics configured to receive light from the sample;
   an immersion chamber configured to hold an immersion fluid; and
   a sample holder including an enclosed channels through a material of the sample holder, the enclosed channel configured to hold the sample, the sample holder positionable such that a surface of the sample holder is adjacent to the immersion fluid, wherein the illumination light passes through the immersion medium and the sample holder before reaching the sample, and wherein the light from the sample passes through the sample holder and the immersion medium before reaching the collection optics.
18. The apparatus of clause 17, wherein the enclosed channel has a generally circular cross-section.
19. The apparatus of clause 17, wherein the channel is part of a microfluidic device.
20. The apparatus of clause 17, wherein the sample holder comprises a first optical surface adjacent to the immersion fluid and a second optical surface adjacent to the immersion fluid, wherein the illumination light passes through the first optical surface and the collected light passes through the second optical surface, and wherein the first optical surface is generally perpendicular to an optical axis of the illumination light and the second optical surface is generally perpendicular to an optical axis of the collected light.
21. The apparatus of clause 20, wherein the first optical surface is generally perpendicular to the second optical surface.
22. The apparatus of clause 17, wherein the first optical surface and the second optical surface form a bottom surface of the enclosed channel.
23. The apparatus of clause 17, when the enclosed channel is coupled to an inlet configured to provide a fluid to the channel and an outlet configured to drain the fluid from the channel.
24. The apparatus of clause 17, further comprising a support member configured to support the sample holder, wherein the sample holder is a modular sample holder removably positionable in the support member.
25. The apparatus of clause 17, wherein the illumination light is a light sheet.

## Claims

1. An apparatus comprising:
illumination optics configured to direct illumination light along an illumination path to a sample;
collection optics configured to receive light from the sample along a collection path;
an immersion chamber configured to hold an immersion medium; and
a sample holder including a material with first surface and a second surface opposite the first surface, wherein the first surface is configured to support the sample and the second surface is in contact with the immersion medium, and
wherein the immersion fluid is chosen to match a refractive index of the sample, and wherein the material of the sample holder is based on a combination with the sample refractive index chosen from the list:
wherein the sample refractive index is about 1.56 and the sample holder material is COC;
wherein the sample refractive index is about 1.45 and the sample holder material is fused silica;
wherein the sample refractive index is about 1.49 and the sample holder material is PMMA; or
wherein the sample refractive index is about 1.33 and the sample holder material is PTFE.

2. The apparatus of claim 1, wherein the material of the sample holder has a thickness based on the combination of the sample refractive index and the sample holder material.

3. The apparatus of claim 1, wherein the sample is processed with a chemical which matches the sample refractive index of the combination chosen from the list of claim 1 and wherein the chemical is chosen from the list:
wherein the sample refractive index is about 1.56 and the chemical is DISCO or ECI;
wherein the sample refractive index is about 1.45 and the chemical is CLARITY;
wherein the sample refractive index is about 1.49 and the chemical is Ce3D; or
wherein the sample refractive index is about 1.33 and the chemical is ExM.

4. The apparatus of claim 3, wherein the chemical and the immersion fluid are the same.

5. The apparatus of claim 1, wherein the sample holder includes a first optical surface and a second optical surface, wherein the first optical surface is along the illumination path and generally perpendicular to the illumination path, and wherein the second optical surface is along the collection path and generally perpendicular to the collection path.

6. The apparatus of claim 5, wherein the first optical surface is generally perpendicular to the second optical surface.

7. The apparatus of claim 1, wherein the sample holder is a modular component configured to fit in a receptacle of the immersion chamber.

8. The apparatus of claim 7, wherein the sample holder forms a lid of the immersion chamber.

9. The apparatus of claim 1, wherein the illumination optics are configured to generate a light sheet as the illumination light.

10. A method of using the apparatus of claim 1, comprising:
processing the sample such that the sample has the index of refraction;
selecting the immersion fluid and the material of the sample holder to match the index of refraction; and
imaging the sample by directing the illumination light with the illumination optics through the immersion fluid to a focal region within the sample and collecting the received light with the collection optics through the immersion fluid.

11. The method of claim 10, wherein processing the sample includes optically clearing the sample.

12. The method of claim 10 further comprising processing the sample with the same chemical as the immersion fluid.

13. The method of claim 10, wherein the sample holder is a modular sample holder, the method further comprising positioning the modular sample holder in a support receptacle such that the second surface of the modular sample holder is in contact with the immersion fluid.

14. The method of claim 10, further comprising selecting a geometry of the modular sample holder to accommodate a type of the sample, a selected imaging modality, an experimental condition, or combinations thereof.

15. The method of claim 10, further comprising collecting a depth stack of images of the sample.
